# EUROPÄISCHE PATENTSCHRIFT

(11) **EP 3 710 357 B1**
(45) Veröffentlichungstag und Bekanntmachung des Hinweises auf die Patenterteilung: **09.03.2022**
(21) Anmeldenummer: 18826496.4
(22) Anmeldetag: 15.11.2018
(51) Int. Cl.: B64C 27/02, B64C 27/82, B64D 27/24

(54) **TRAGSCHRAUBER**
AUTOGYRO
AUTOGIRE

(30) Priorität: 17.11.2017 DE 202017106992 U
(43) Veröffentlichungstag der Anmeldung: 23.09.2020
(73) Patentinhaber: Schoppe Development UG (Haftungsbeschränkt), 99974 Mühlhausen (DE)
(72) Erfinder: SCHOPPE, Ronald, 99974 Mühlhausen (DE)
(74) Vertreter: Weidner Stern Jeschke
(86) Internationale Anmeldenummer: PCT/DE2018/200104
(87) Internationale Veröffentlichungsnummer: WO 2019/096358

(56) Entgegenhaltungen:
- WO-A1-01/60692
- DE-T5-112013 002 003
- FR-A- 761 584
- FR-A- 864 522
- FR-A1- 2 920 129
- GB-A- 2 362 627
- US-A- 5 727 754
- US-B1- 9 611 036

## Beschreibung

Die Erfindung betrifft ein Luftfahrzeug in Form eines sogenannten Tragschraubers, mit einem Rumpf, einem darauf an einem Mast angeordneten drehbaren Rotor, welcher durch die Vorwärtsbewegung des Luftfahrzeuges von unten luftdurchströmt und insbesondere dadurch im Flug in Autorotation versetzt wird. Die Erfindung betrifft eine Masseverstelleinrichtung für ein Luftfahrzeug, insbesondere Tragschrauber oder Hubschrauber. Zudem betrifft die Erfindung eine kombinierte Transporteinheit aus Akkumulator und Transportbehältnis.

Durch die Autorotation wird ein Auftrieb erzeugt. Der für die Vorwärtsbewegung des Tragschraubers notwendige Schub wird durch einen vorzugsweise im Heckbereich angeordneten motorisch angetriebenen Propeller erzeugt.

Gattungsgemäße Tragschrauber sind unter anderem aus den DE 11 2013 002 003 T5 und DE 20 2015 005 887 U1 beschrieben. Derartige Tragschrauber benötigen für den Start und die Landung eine entsprechende Rollstrecke. Beim Start wird der über eine einfache Kippkopfsteuerung Rotor in eine Vorrotation versetzt, bei welcher sich der Tragschrauber noch nicht um die eigene Hochachse dreht. Während des Starts und des Fluges wird dann keine Antriebsenergie mehr in den Rotor eingebracht. Die den Auftrieb bewirkende Autorotation des Rotors wird jetzt ausschließlich durch die anströmende Luft bewirkt. Die Rotorblätter sind üblicherweise nicht verstellbar (fixed Pitch) an der Rotornabe befestigt, was einen konstruktiv einfachen Aufbau des Rotorsystems ermöglicht.

Bekannt sind auch gattungsgemäße Tragschrauber mit zwei seitlich vom Rumpf abragend angeordneten Vortriebspropellern. Durch die höhere Antriebsleistung und günstigere strömungstechnische Verhältnisse soll eine Verkürzung der notwendigen Startrollstrecke erreicht werden.

Es sind auch Tragschrauber bekannt, welche verstellbare Rotorblätter aufweisen und die damit einen Senkrechtstart ausführen können. Dabei handelt es sich aber um einen sogenannten Jump-Start, bei dem der Rotor bei einer keinen Auftrieb erzeugenden Blatteinstellung auf eine Drehzahl oberhalb der Flugdrehzahl gebracht wird. Danach wird er vom Antrieb entkoppelt und die Rotorblätter werden in eine Auftrieb erzeugende Einstellung gebracht. Mit der Trägheit des Rotorsystems, meist noch durch Gewichte an den Rotorblattspitzen verstärkt, startet der Tragschrauber dann sprungartig. Derartige Starts sind jedoch schwer kontrollierbar. Eine derartige Lösung wird in der US 5,727,754 beschrieben. Durch das Erfordernis der Verstellbarkeit der Rotorblätter sind diese Lösungen ähnlich aufwändig wie bei herkömmlichen Hubschraubern.

Die GB 2 362 627 A beschreibt ein Gyro-Fluggerät zum Schweben in der Luft mit zwei seitlichen Propellern am Rumpf und einen Rotor mit Rotorblättern an seiner Oberseite. Die beiden Propeller sind unabhängig voneinander einstellbar, eine Schubrichtungsumkehr wird über ein Pitchen der Propellerblätter erreicht und ein Gegendrehmoment zur Rotation der Rotorblätter realisiert.

Aus US 9,611,036 B1 ist ein Gyrocopter bekannt, bei dem der Rotor mit mehreren Rotorblättern mit horizontalen Triebwerken am Rumpf gekoppelt ist, wobei die Triebwerke während des Fluges einen Vorschub erzeugen und komprimierte Luft für Spitzendüsen an den Rotorblättern generieren, um den Rotor während des Startes anzutreiben.

Die FR 2 920 129 A1 offenbart ein Verfahren zum Manövrieren eines konventionellen Flugzeuges mit seitlichen Triebwerken im Flug, bei dem der Schwerpunkt des Flugzeuges durch Überführen von Kraftstoff zwischen zwei Kraftstofftanks verschoben wird.

Aus der WO 01/60692 A1 ist eine ferngesteuerte Drohne für Überwachungs- und Inspektionsaufgaben bekannt, bei der zur dynamischen Stabilisierung der fliegenden Drohne in einer Übergangsbewegung eine bewegliche Ausgleichsmasse in einem umgekehrten Pendel am vorderen äußeren Teil der Drohne in der Achse des Propellers angebracht und mit dem Dom der Drohne über eine Biegefeder verbunden ist.

Die FR 864 522 A offenbart ein Flugzeug mit vorne angeordnetem Propeller, wobei ein Lenkrad über Ketten mit einem Schlitten mit beweglichen Gegengewicht im Rumpf und weiter mit außen bewegbaren Bremsklappen am Heck verbunden ist, sodass zur Minderung eines Sturzfluges durch Manövrieren des Lenkrades das Gegengewicht zum Schwerpunkt des Flugzeuges verschoben und durch ein Öffnen der Bremsklappen am Heck eine größere Bremsfläche geschaffen wird.

Es ist Aufgabe der Erfindung, den Stand der Technik zu verbessern. Insbesondere ist es Aufgabe der Erfindung, einen Tragschrauber vorzuschlagen, mit dem ein kontrolliertes senkrechtes Starten, Schweben und Landen möglich ist.

Diese Aufgabe wird durch einen Tragschrauber, aufweisend einen Rumpf mit an dessen Oberseite angeordnetem und durch Luftströmung in Autorotation versetzbaren Rotor mit Rotorblättern, wobei der Rotor einen Rotorantrieb aufweist, sodass der Rotor zeitweise motorisch antreibbar ist, wobei eine Masseverstelleinrichtung in dem Rumpf angeordnet ist, sodass der Rumpf, insbesondere bei einem Senkrechtstart, horizontal ausrichtbar ist und/oder der Tragschrauber richtungssteuerbar ist. Vorteilhafte Ausgestaltungen der Erfindung sind in den Unteransprüchen angegeben.

Ein Tragschrauber verfügt dazu über einen motorisch angetriebenen Rotor mit nicht verstellbaren oder verstellbaren Rotorblättern, welcher über den motorischen Antrieb auf eine oberhalb der Autorotationsdrehzahl im Flug liegende Startdrehzahl beschleunigt werden kann. Zum Ausgleich des dadurch beim Startvorgang entstehenden Drehmoments, durch welches der Tragschrauber veranlasst wird, sich um die eigene Hochachse zu drehen, sind die zwei seitlich vom Rumpf abragenden Vortriebspropeller so steuerbar, dass insbesondere bei zumindest einem Propeller eine Schubrichtungsumkehr realisierbar ist, wodurch ein klassischer kontrollierbarer Senkrechtstart ermöglicht wird.

Nach dem Start erfolgt in gattungsgemäßer Weise die Abschaltung des Rotorantriebs und der Übergang in den Vorwärtsflug, bei welchem der erforderliche Auftrieb nur noch durch die Autorotation des Rotors erzeugt wird. Analog zum Startvorgang ist ein kontrollierter Schwebeflug sowie eine Senkrechtlandung möglich.

Der Antrieb des Rotors und der Propeller ist mit den unterschiedlichsten Antriebskonzepten realisierbar. Eine sehr fortschrittliche Variante stellt der rein elektrische Antrieb dar, bei welchem der Rotor sowie die Propeller über batteriebetriebene Elektromotoren angetrieben werden. Die Drehzahlsteuerung sowie die Schubumkehr der Propeller durch Drehrichtungsumkehr ist dabei auf technisch einfache Weise möglich.

Dies gilt auch für ein hybrides Antriebskonzept, bei dem über einen nichtelektrischen Antriebsmotor der zeitweise Antrieb des Rotors sowie der permanente Antrieb eines elektrischen Generators erfolgt, mit welchem die Elektromotoren der Propeller versorgt werden.

Insbesondere bei Varianten mit einem nichtelektrischen Antrieb der Propeller kann die Realisierung einer Schubrichtungsumkehr auch durch eine entsprechende Verstellung der Propellerflügel erfolgen.

Mithin kann ein Tragschrauber bereitgestellt werden, aufweisend einen Rumpf, mit an dessen Oberseite angeordneten und durch Luftströmung in Autorotation versetzbarem Rotor mit Rotorblättern, wobei der Rotor einen Rotorantrieb aufweist, sodass der Rotor zeitweise motorisch antreibbar ist.

Somit können Tragschrauber, welche insbesondere keinen Heckrotor zur Stabilisierung aufweisen, einen Senkrechtstart realisieren.

Folgendes Begriffliche sei erläutert:
Ein "Tragschrauber", auch "Autogyro", "Gyrokopter" oder "Gyrocopter" genannt, ist insbesondere ein Drehflügler, der in seiner Funktionsweise einem Hubschrauber ähnelt. Jedoch wird hier der Rotor im Allgemeinen nicht durch ein Triebwerk, sondern passiv durch den Fahrtwind in Drehung versetzt. Dieses in Drehung versetzen wird als "Autorotation" bezeichnet. Der Auftrieb ergibt sich dabei durch den Widerstand des sich drehenden Rotorblatts bei nach hinten geneigter Rotorachse. Der Vortrieb erfolgt meist durch ein Propellertriebwerk. Grundsätzlich können auch Düsentriebwerke oder andere Antriebe eingesetzt werden.

Ein "Rumpf", auch als "Gondel" bezeichnet, bildet insbesondere die Hülle eines Raums, welcher für Ladung und Personen vorgesehen ist.

Die "Oberseite" des Rumpfes ist der Teil des Rumpfes, welcher im Allgemeinen am weitesten von einem Erdboden entfernt ist.

Eine "Luftströmung" entsteht insbesondere dadurch, dass bei einer Bewegung relativ zur Luft an einer Oberfläche (hier Rumpf und Rotorblatt) eine Strömung und somit eine Relativbewegung zu der Luft erfolgt.

Ein "Rotor" ist insbesondere ein rotierender Teil einer Maschine und weist insbesondere vorliegend "Rotorflügel" auf. Der Rotor und die Rotorflügel sind im Allgemeinen horizontal ausgerichtet, wobei bei dem Tragschrauber zumeist eine leichte Neigung gegenüber der Horizontalen gegeben ist.

Ein Kern der Erfindung liegt vorliegend insbesondere darin, dass der Rotor mit seinen zugehörigen Rotorblättern motorisch angetrieben werden kann, wobei im normalen Vorwärtsflug ein Motor dem Rotor mit den zugehörigen Rotorblättern keine Rotation aufprägt.

In einer Ausführungsform kann der Tragschrauber am Rumpf beidseitig und horizontal von diesem Rumpf abragend einen ersten angetriebenen, schuberzeugenden Vortrieb, insbesondere Propeller, und einen zweiten angetriebenen, schuberzeugenden Vortrieb aufweisen, und eine Schubkraft des ersten angetriebenen, schuberzeugenden Vortriebs und eine Schubkraft des zweiten angetriebenen, schuberzeugenden Vortriebs unabhängig voneinander einstellbar sein.

Ein "erster angetriebener schuberzeugender Vortrieb" und ein "zweiter angetriebener schuberzeugender Vortrieb" sind insbesondere zueinander horizontal beabstandet angeordnet und prägen dem Tragschrauber eine entsprechende Kraft auf, welche im Allgemeinen zum Vorwärtsflug verwendet wird.

Vorzugsweise dient dem Vortrieb eine Luftschraube, welche vorliegend Propeller genannt wird. Grundsätzlich können auch andere Triebwerke, wie Düsentriebwerke, eingesetzt werden.

Um einen Senkrechtstart zu ermöglichen und die mit dem Motor in Rotation versetzten Rotorblätter und die daraus resultierende Drehung des Rumpfs zu kompensieren, sind der erste angetriebene schuberzeugende Antrieb und der zweite angetriebene schuberzeugende Antrieb voneinander unabhängig einstellbar. Zudem kann durch diese Eigenschaft dem Tragschrauber eine Richtungsänderung aufgeprägt werden.

Um bei einem Senkrechtstart mit motorangetriebenen Rotorblättern die dem Rumpf aufgeprägten Rotationskräfte zu kompensieren, können Schubrichtungsumkehreinrichtungen der Vortriebe verwendet werden. Diese Schubrichtungsumkehreinrichtungen erzeugen insbesondere eine Schubumkehr.

Beim Verwenden von Propellern als Vortriebe können die Schubkräfte durch das Verstellen der Propellerflügel oder durch Verändern der Drehzahl der Propeller eingestellt werden. Zudem kann die Schubrichtungsumkehreinrichtung mittels der Propeller realisiert werden, wobei die Schubumkehr insbesondere durch Verstellen der Propellerflügel und/oder durch ein Verändern einer Drehrichtung realisiert wird.

Somit beruht ein Kern der Erfindung darauf, dass durch unterschiedliches Ansteuern des ersten und zweiten angetriebenen schuberzeugenden Vortriebs sowie dem motorischen Antrieb des Rotors mit seinen Rotorblättern derart kombiniert wird, dass ein Senkrechtstart des Tragschraubers realisierbar ist. Das bedeutet, dass anders als beispielsweise bei Hubschraubern, welche einen permanenten Motorbetrieb verwenden und bei denen die Vorwärtsbewegung sowie das Senken und Heben durch ein Pitchen der Rotorblätter erfolgt, dies bei vorliegenden Tragschraubern mit festem Pitchwinkel der Rotorblätter und ohne Heckrotor realisierbar ist.

Erfindungsgemäß wird die Aufgabe gelöst durch einen zuvor beschriebenen Tragschrauber, welcher eine Masseverstelleinrichtung in dem Rumpf aufweist, sodass der Rumpf, insbesondere bei einem Senkrechtstart, horizontal ausrichtbar ist und/oder der Tragschrauber richtungssteuerbar ist. Dies ermöglicht bei einem erfindungsgemäßen Tragschrauber aber auch bei Tragschraubern des Standes der Technik oder Hubschraubern ein Ausrichten des Rumpfs oder ein Flugrichtungsändern aufgrund einer Masseverschiebung und somit einer Schwerpunktsverlagerung des entsprechenden Luftfahrzeugs.

In einer diesbezüglichen Ausführungsform weist die Masseverstelleinrichtung eine Masseeinheit und eine Verstelleinheit auf.

Durch die Verstelleinheit wird die Masse innerhalb des Rumpfes derart verortet, dass dies eine wesentliche Verlagerung des Schwerpunkts des entsprechenden Luftfahrzeugs zur Folge hat. Dies wiederum kann dazu eingesetzt werden, dass, sofern die Verstelleinheit eine Verschiebung in den drei Raumrichtung realisieren kann, dies zum Steuern oder Trimmen des Luftfahrzeugs oder eben auch zum Ausrichten des Rumpfes eingesetzt werden kann.

Dies ist insbesondere relevant bei erfindungsgemäßen Tragschraubern, da bei diesen während eines Senkrechtstarts im Allgemeinen der Rumpf stark geneigt ist. Dies kann zu einem Unwohlsein der Passagiere führen. Durch die aktive Verlagerung des Schwerpunktes kann jedoch der Rumpf, beispielsweise horizontal, ausgerichtet werden, sodass das Fluggefühl für die Passagiere optimiert ist. Insbesondere kann so einer Reisekrankheit eines Passagiers vorgebeugt werden.

Um eine zusätzliche Masse im Tragschrauber zu vermeiden, kann die Masseeinheit ein Transportbehälter, insbesondere eine Frachtbox, ein Energiespeicher, insbesondere ein Akkublock oder ein Akkumulator, und/oder eine Antriebseinheit, insbesondere Motor, sein.

Sofern ein Transportbehälter verwendet wird, wird nach dem Beladen und vor dem Start das Gewicht des Transportbehälters, beispielsweise mittels Dehnungsmesstreifen, bestimmt und entsprechend mittels der Steuerung und dem Ansteuern der Verstelleinheit der Transportbehälter inklusive Ladung als Masseeinheit verwendet.

Insbesondere vorteilhaft ist, wenn eine Masse verwendet wird, welche ihr Gewicht und somit ihre Masse während des Einsatzes im Wesentlichen nicht ändert. Dies kann beispielsweise insbesondere bei einem elektrisch angetriebenen Tragschrauber ein Akkumulator oder bei einem Hybrid- oder Motortragschrauber der Motor als solches sein.

Als "Verstelleinheit" können insbesondere Stellmotoren, welche insbesondere jeweils die Masse in den drei Raumrichtungen verortet, oder ein Hexapod eingesetzt werden. Der Hexapod ist insbesondere deshalb vorteilhaft, da mit diesem sehr effizient die entsprechenden Raumrichtungen angesteuert werden können. Hexapoden sind spezielle Formen von Parallelkinematikmaschinen und verfügen im Wesentlichen über sechs Beine und ermöglichen eine Beweglichkeit in sechs Freiheitsgraden (drei translatorische sowie drei rotatorische).

Um die Masseverschiebung zum Steuern des Luftfahrzeugs und somit des Tragschraubers oder auch zum Ausrichten des Rumpfes zu verwenden, weist das Luftfahrzeug und insbesondere der erfindungsgemäße Tragschrauber eine Steuereinrichtung auf, welche die Masseverstelleinrichtung ansteuert und/oder regelt. Beim Steuern wird insbesondere ein vorgegebenes Signal durch die Stellglieder erreicht, wobei hingegen beim Regeln eine Rückkopplung entsprechender Messwerte erfolgt.

So kann beispielsweise über den Steuerhebel in dem Luftfahrzeug die Verstelleinheit angesteuert und entsprechend der Schwerpunkt verändert werden, sodass insbesondere mittels des Steuerhebels eine Richtungsänderung realisiert wird. Zudem kann eine entsprechende Trimmung realisiert werden.

Weiterhin kann durch das Ansteuern oder entsprechendes Regeln, sofern beispielsweise ein Lagesensor gegeben ist, welcher die Lage des Rumpfes im Raum bestimmt, bei einem Senkrechtstart des Tragschraubers der Rumpf derart ausgerichtet und geregelt werden, dass dieser sich im Wesentlichen horizontal ausrichtet.

Zudem kann der Tragschrauber einen elektrischen Antrieb oder einen Hybridantrieb aufweisen, wobei der elektrische Antrieb oder der Hybridantrieb einen austauschbaren elektrischen Energiespeicher, insbesondere Akkumulator, aufweist.

So muss das Luftfahrzeug nicht permanent einen maximal ladungsdimensionierten Akkumulator vorhalten, sondern kann entsprechend seiner Aufgaben mit einem Akkumulator versehen werden, welcher für die entsprechende Aufgabe ausreichend ladungsdimensioniert ist.

Somit kann beispielsweise mehr Laderaum zum Transport von Gütern oder Personen zur Verfügung gestellt werden.

In einer diesbezüglichen Ausführungsform aber auch in einem weiteren Aspekt, welcher die Aufgabe löst, weist ein Tragschrauber ein austauschbares Transportgutbehältnis auf, wobei das austauschbare Transportgutbehältnis mit dem austauschbaren elektrischen Energiespeicher mittels einer mechanischen Verbindung gekoppelt ist, sodass eine kombinierte Transporteinheit zum Transportieren von Frachtgut und zum Energieversorgen des elektrischen Abtriebs oder des Hybridantriebs realisiert ist und die kombinierte Transporteinheit in seiner Gesamtheit beladbar oder entladbar ist.

Somit ist der Kern dieser Erfindung darin zu sehen, dass der Energiespeicher und somit der Akkumulator mit dem eigentlichen Behältnis zum Transport von Transportgut eine einzelne Einheit ausbildet. Dies bedeutet, dass beim Beladen und/oder Entladen nicht nur ein Transportbehältnis mit dem entsprechenden Frachtgut ein- beziehungsweise ausgeladen wird, sondern immer zusätzlich auch der damit mechanisch verbundene Akkumulator.

Dies ist insbesondere für die Transportbranche wichtig. Derartige Kombinationen aus Akkumulator, welcher einen wesentlichen Beitrag zur elektrischen Versorgung eines Gefährts realisiert, und Transportbehältnis, welches einen entsprechenden Stauraum für Transportgut zur Verfügung stellt, kann unabhängig eines Fahrzeuges verwendet werden.

Zudem kann damit ein schneller Austausch erfolgen und Ladezeiten des Akkumulators eines Fahrzeugs müssen nicht beachtet werden, da beispielsweise ein entladener Akkumulator aus einem Fahrzeug entfernt und gegebenenfalls ein neuer Akkumulator mit einem zugehörigen entsprechenden Transportbehältnis wieder in dem Fahrzeug verortet wird.

Somit kann das Fahrzeug anschließend den vorgesehenen Dienst erfüllen. Die entladene Kombination aus Akkumulator und Transportbehältnis kann aufgeladen werden und in einem anderen Fahrzeug, beispielsweise in einem Transporter oder in einem Lastkraftwagen, weiter verwendet werden.

Mithin ist die kombinierte Transporteinheit unabhängig von einem Fahrzeug beschrieben.

Ein weiterer Einsatz derartiger kombinierter Transporteinheiten kann in Schiffen oder auch in Flugzeugen vorgesehen sein. Auch als Einsatz eines Containers mit Energieversorgung kann dies eingesetzt werden.

Mithin können sämtliche Transporteinrichtungen, wie beispielsweise auch Züge, welche von Logistikunternehmen verwendet werden, mit entsprechenden kombinierten Transporteinheiten versorgt werden.

Die den austauschbaren elektrischen Energiespeicher und den austauschbaren Transportgutbehälter kombinierende mechanische Verbindung kann sowohl als endfeste Verbindung oder auch als eine reversibel lösbare Verbindung ausgestaltet sein.

Unter einer "festen Verbindung" ist im Wesentlichen eine Verbindung zu verstehen, welche nur durch die Zerstörung der Verbindung die kombinierte Transporteinheit wieder auftrennt. Eine "reversibel lösbare Verbindung" kann beispielsweise eine Schraube oder Klemmverbindung sein, welche im Allgemeinen wiederverwendbar ist.

So kann beispielsweise, nachdem ein Akkumulator defekt ist, das austauschbare Transportgutbehältnis oder entsprechend der austauschbare Transportgutbehälter auf einen anderen Akkumulator aufgesetzt und verwendet werden.

In einer Ausführungsform sowohl des Tragschraubers als auch der kombinierten Transporteinheit weist das Transportgutbehältnis eine verschließbare Öffnung auf. Bei dieser Öffnung kann es sich beispielsweise um eine Klappe handeln, durch welche beispielsweise Koffer und dergleichen in den Innenraum des austauschbaren Transportbehältnisses eingebracht werden können.

Um bei einem Transport ein Delokalisieren des Transportgutes zu verhindern, kann das austauschbare Transport(gut)behältnis eine Arretierungseinrichtung und/oder Transportfächer aufweisen.

Die Arretierungseinrichtung kann beispielsweise durch Gurte realisiert werden. Die Transportfächer ihrerseits untergliedern insbesondere den zur Verfügung stehenden Transportraum und können beispielsweise selbst wiederum Klappen zum Verschließen und Verstauen aufweisen.

Um das Auswechseln der kombinierten Transporteinheit und damit auch wieder das Versorgen eines Fahrzeuges mit elektrischer Energie oder entsprechend das Aufladen des Akkumulators zu gewährleisten, kann der austauschbare elektrische Energiespeicher einen elektrischen Anschluss zur Energieaufnahme oder zur Energieabgabe aufweisen.

In einer Ausführungsform des Tragschraubers und in einer Ausführungsform der kombinierten Transporteinheit ist das Verhältnis eines Volumens des austauschbaren elektrischen Energiespeichers zu einem Volumen des austauschbaren Transportgutbehältnisses kleiner 1 : 2, insbesondere kleiner 1 : 3.

Somit ist im Allgemeinen der für Ladung zur Verfügung stehende Raum deutlich größer als das Volumen, welches durch den Akkumulator beansprucht wird.

Mithin kann die kombinierte Transporteinheit im Wesentlichen quaderförmig ausgebildet sein. Insbesondere ist darunter zu verstehen, dass aus einem gewissen Abstand das Gebilde quaderförmig aussieht. Zudem können Ecken des Quaders abgerundet und dergleichen ausgestaltet sein, sodass Verletzungen durch Spitzen und Kanten für Personen ausgeschlossen sind.

Um einen Austausch der kombinierten Transporteinheit schnell und einfach mit bestehenden Mitteln zu realisieren, kann die kombinierte Transporteinheit eine Gabelträgeraufnahme aufweisen.

Somit kann beispielsweise ein Flurförderfahrzeug, wie beispielsweise ein Gabelstapler, die kombinierte Transporteinheit mit seinen Gabeln aufnehmen und aus einem Fahrzeug entfernen oder in dieses wieder hinein begeben.

Ein Ausführungsbeispiel der Erfindung ist in den Figuren dargestellt und wird im Folgenden näher erläutert. Es handelt sich im dargestellten Ausführungsbeispiel um einen Tragschrauber mit rein elektrischen Antrieben.

Die schematischen Darstellungen eines Tragschraubers zeigen:
- Fig. 1: eine Seitenansicht
- Fig. 2: die Vorderansicht
- Fig. 3: die Draufsicht bei Autorotation
- Fig. 4: die Draufsicht bei angetriebenem Rotor

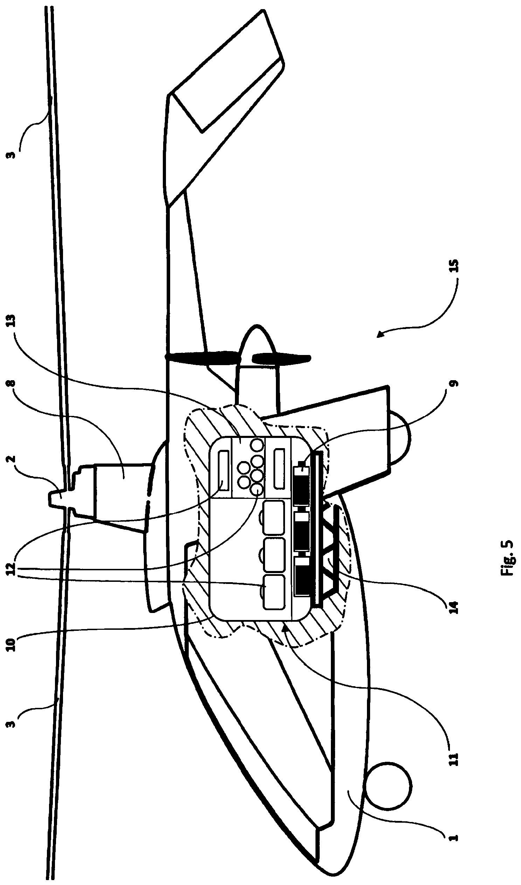

- Fig. 5: eine schematische Seitenansicht eines Tragschraubers mit einer Masseverstelleinrichtung und einer darauf angeordneten kombinierten Transporteinheit.

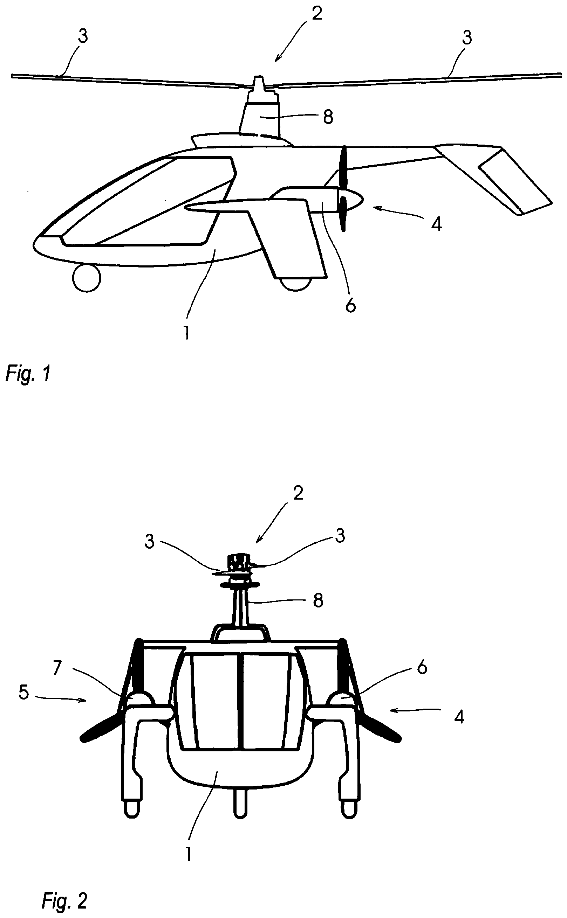

Der erfindungsgemäße Tragschrauber weist einen Rumpf 1 mit einem auf dem Mast 8 angeordneten Rotor 2 mit nicht verstellbaren Rotorblättern 3 auf (Fig. 1). Der Rotor 2 ist über einen nicht dargestellten batteriebetriebenen Elektromotor antreibbar. Im Heckbereich des Rumpfes 1 sind beidseitig seitlich über die Kontur des Rumpfes 1 rausragend die Elektromotoren 6 und 7 mit den Propellern 4 und 5 angeordnet (Fig. 2).

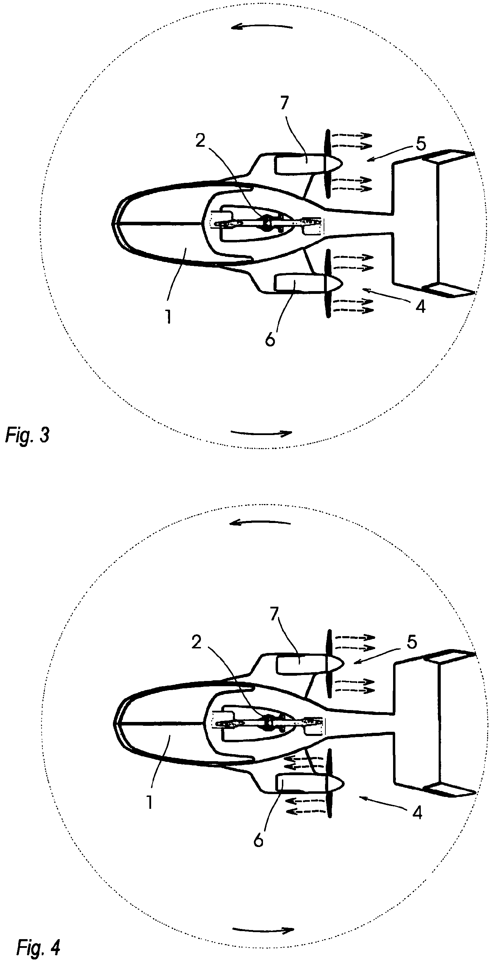

Fig. 3 zeigt einen klassischen Startvorgang mit Autorotation des Rotors 2. Die Drehrichtung der Rotorblätter 3 und die Schubrichtung der angetriebenen Propeller 4 und 5 sind dabei schematisch durch Pfeile dargestellt.

Fig. 4 zeigt die Antriebszustände bei einem Senkrechtstart mit motorisch angetriebenem Rotor 2. Die Rotordrehzahl ist dabei so gewählt, dass diese einen Auftrieb erzeugt, der größer ist als die Gesamtmasse und der Tragschrauber somit abhebt. Zum Ausgleich des nun auftretenden Drehmoments, welches den Rumpf 1 dazu zwingt, sich um die eigene Hochachse zu drehen, ist beim Propeller 4 durch einen Wechsel der Drehrichtung des Elektromotors 6 eine Schubrichtungsumkehr realisiert. Durch eine entsprechende Regelung der Drehzahlen der Elektromotoren 6 und 7 lässt sich das auf den Rumpf 2 wirkende Drehmoment kontrolliert ausgleichen. In den Fig. 3 und 4 sind die Rotorblätter 3 nur teilweise und angedeutet dargestellt.

Ein Tragschrauber 15 weist einen Rumpf 1, einen Rotor 2 mit Rotorblättern 3, welche an einem Mast 8 angeordnet sind, auf. Im Inneren des Tragschraubers 15 ist mit dem Rumpf 1 ein Hexapod 14 fest verbunden. An dem Hexapod 14 ist eine Transporteinheit 11 angeordnet. Die Transporteinheit 11 weist in ihrem unteren Bereich einen Akkumulator 9 und in seinem oberen Bereich einen Transportbehälter 10 auf. Der Transportbehälter 10 weist zudem Transportfächer 13 auf. In dem Transportbehälter 10 ist Transportgut 12, wie Gepäck, eingebracht und entsprechend mittels Gurten (nicht dargestellt) befestigt.

Startet nun der Tragschrauber 15 mittels eines Senkrechtstartes, wird der Hexapod 14 derart angesteuert, dass sich der Schwerpunkt des Tragschraubers 15 durch Verschieben der Transporteinheit 11 derart verlagert, dass der Rumpf 1 im Wesentlichen horizontal ausgerichtet ist.

## Patentansprüche

1. Tragschrauber (15), aufweisend einen Rumpf (1) mit an dessen Oberseite angeordnetem und durch Luftströmung in Autorotation versetzbaren Rotor (2) mit Rotorblättern (3), wobei der Rotor (2) einen Rotorantrieb aufweist, sodass der Rotor zeitweise motorisch antreibbar ist, **gekennzeichnet durch** eine Masseverstelleinrichtung (11) in dem Rumpf, sodass der Rumpf, insbesondere bei einem Senkrechtstart, horizontal ausrichtbar ist und/oder der Tragschrauber richtungssteuerbar ist.

2. Tragschrauber nach Anspruch 1, **dadurch gekennzeichnet, dass** die Masseverstelleinrichtung eine Masseeinheit und eine Verstelleinheit (14) aufweist.

3. Tragschrauber nach Anspruch 2, **dadurch gekennzeichnet, dass** die Masseeinheit ein Transportbehälter (10), insbesondere eine Frachtbox, ein Energiespeicher (9), insbesondere ein Akkublock, und/oder eine Antriebseinheit, insbesondere Motor, ist.

4. Tragschrauber nach einem der Ansprüche 2 oder 3, **dadurch gekennzeichnet, dass** die Verstelleinheit einen Stellmotor oder einen Hexapod aufweist.

5. Tragschrauber nach einem der vorherigen Ansprüche, **gekennzeichnet durch** eine Steuereinrichtung, welche die Masseverstelleinrichtung ansteuert und/oder regelt.

6. Tragschrauber nach einem der vorherigen Ansprüche, **gekennzeichnet durch** einen Lagesensor, sodass insbesondere eine horizontale Ausrichtung des Rumpfes ermittelbar ist.

7. Tragschrauber nach einem der vorherigen Ansprüche, **dadurch gekennzeichnet, dass** der Tragschrauber einen elektrischen Antrieb oder einen Hybridantrieb aufweist, wobei der elektrische Antrieb oder der Hybridantrieb einen austauschbaren elektrischen Energiespeicher (9), insbesondere Akkumulator, aufweist.

## Claims

1. Autogyro (15), comprising a fuselage (1) having a rotor (2) with rotor blades (3) that is arranged on its upper side and can be set into autorotation by air flow, wherein the rotor (2) comprises a rotor drive such that the rotor can be periodically motor-driven, **characterised by** a mass-adjustment apparatus (11) in the fuselage such that the fuselage can be horizontally oriented and/or the autogyro can be controlled in terms of direction, in particular during vertical take-off.

2. Autogyro according to claim 1, **characterised in that** the mass-adjustment apparatus comprises a mass unit and an adjustment unit (14).

3. Autogyro according to claim 2, **characterised in that** the mass unit is a transport container (10), in particular a freight box, an energy storage means (9), in particular a rechargeable battery block, and/or a drive unit, in particular a motor.

4. Autogyro according to any of claims 2 or 3, **characterised in that** the adjustment unit comprises an actuator or a hexapod.

5. Autogyro according to any of the preceding claims, **characterised by** a control apparatus, which actuates and/or regulates the mass-adjustment apparatus.

6. Autogyro according to any of the preceding claims, **characterised by** a position sensor, such that in particular a horizontal orientation of the fuselage can be determined.

7. Autogyro according to any of the preceding claims, **characterised in that** the autogyro comprises an electric drive or a hybrid drive, wherein the electric drive or hybrid drive comprises an interchangeable electrical energy storage means (9), in particular a rechargeable battery.

## Revendications

1. Autogire (15), comportant un fuselage (1) avec un rotor (2), disposé sur sa face supérieure et pouvant être amené en autorotation par écoulement d'air, doté de pales de rotor (3), le rotor (2) comportant un entraînement de rotor, de telle sorte que le rotor peut être temporairement entraîné de manière motorisée, **caractérisé par** un dispositif de déplacement de masse (11) dans le fuselage, de telle sorte que le fuselage, en particulier lors d'un décollage vertical, peut être orienté horizontalement et/ou une commande de direction peut être appliquée à l'autogire.

2. Autogire selon la revendication 1, **caractérisé en ce que** le dispositif de déplacement de masse comporte une unité de masse et une unité de déplacement (14).

3. Autogire selon la revendication 2, **caractérisé en ce que** l'unité de masse est un contenant de transport (10), en particulier une boîte de fret, un dispositif de stockage d'énergie (9), en particulier une batterie d'accumulateurs, et/ou une unité d'entraînement, en particulier un moteur.

4. Autogire selon l'une des revendications 2 ou 3, **caractérisé en ce que** l'unité de déplacement comporte un moteur de positionnement ou un hexapode.

5. Autogire selon l'une des revendications précédentes, **caractérisé par** un dispositif de commande, qui commande et/ou régule le dispositif de déplacement de masse.

6. Autogire selon l'une des revendications précédentes, **caractérisé par** un capteur de position, de telle sorte qu'en particulier une orientation horizontale du fuselage peut être déterminée.

7. Autogire selon l'une des revendications précédentes, **caractérisé en ce que** l'autogire comporte un entraînement électrique ou un entraînement hybride, l'entraînement électrique ou l'entraînement hybride comportant un dispositif de stockage d'énergie (9) électrique échangeable, en particulier un accumulateur.
